(19) Europäisches Patentamt

European Patent Office

Office européen des brevets

(11) **EP 2 168 920 A1**

(12) **EUROPEAN PATENT APPLICATION**

(43) Date of publication:
**31.03.2010 Bulletin 2010/13**

(51) Int Cl.:
*C02F 1/28* (2006.01)          *C02F 1/52* (2006.01)

(21) Application number: **08168791.5**

(22) Date of filing: **11.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.09.2008 IN MU20552008**

(71) Applicant: **Unilever N.V.**
**3013 AL Rotterdam (NL)**

(72) Inventors:
• **Dagaonkar, Manoj Vilas**
  **Bangalore, Whitefield, 560 066 (IN)**
• **Majumdar, Udayan**
  **Bangalore, Whitefield, 560 066 (IN)**

(74) Representative: **Rosen Jacobson, Frans Lucas M.**
**Unilever Patent Group**
**Olivier van Noortlaan 120**
**3133 AT Vlaardingen (NL)**

(54) **Water purification composition and method**

(57)    The present invention relates to a composition and a method for purification of water, more particularly to drinking water.

It is an object of the present invention to provide a composition and a method for purifying water, without using conventional filter aids, flocculating agents or pH modifying agents.

According to the first aspect, the present invention provides a composition to aid filtration of water comprising an Iron or Aluminium salt; a chloride or sulphate of Magnesium or Calcium; and clay.

**EP 2 168 920 A1**

**Description**

**FIELD OF INVENTION**

The present invention relates to a composition and a method for purification of water, more particularly to drinking water.

The invention has been developed primarily for use in purification of drinking water, and will be described hereinafter with reference to this application. However, it will be appreciated that the invention is not limited to this particular field of use.

**BACKGROUND AND RELATED ART**

Any discussion of the prior art throughout the specification should in no way be considered as an admission that such prior art is widely known or forms part of the common general knowledge in the field.

Clean and pure potable water is one of the most basic requirements of mankind. In developed countries, purified potable water is supplied on a large scale through networks managed by the local Governments. Such water is typically supplied directly to the consumer's homes. However, in some parts of the world, for example in some rural areas of developing countries, people do not have "direct-to-home" water supply. They have to depend upon non-potable community sources of water, such as wells, in which case, the water needs to be purified before consumption. Considerable numbers of people die each year due to contaminated drinking water. Thus, there is a need for methods of water purification that would give clean and pure potable water in a fast and efficient manner.

Amongst the various contaminants present in drinking water; suspended solids, and microbial cysts/protozoa (including Giardia and Cryptosporidium) are the major ones. Giardia and Cryptosporidium are becoming the most widespread intestinal parasites, which are associated with waterborne diseases. These organisms are not bacteria or viruses, but are protozoans with complex life cycles. The diseases caused by these organisms include Amoebiasis, which is characterized by abdominal discomfort, fatigue, diarrhoea, flatulence, weight loss; and Cryptosporidiosis and Giardiasis characterized by diarrhoea and abdominal discomfort. Presence of suspended solids and turbidity in drinking water makes it unfit for consumption. The presence of these contaminants in ground water is reported to be generally high during and immediately post-monsoon in tropical countries, when the Total Dissolved Salts (TDS) is generally around 10 to 20 ppm; and turbidity is around 50 NTU; "NTU" stands for Nephelometric Turbidity Unit which is the unit to measure turbidity of water. Turbidity refers to the scattering and absorption of light, which is caused by suspended matter such as clay, dissolved organic material and microscopic organisms. Turbidity in excess of 5 NTU is just noticeable to the average person.

Therefore, some attempts have been made in the past to purify water, especially to remove suspended solids, turbidity and microbial contaminants.

US3399136 (JOHNS-MANVILLE CORPORATION, 1968) in which water contaminated with bacteria and viruses is purified by adding Iron or Aluminium compounds in an amount sufficient to combine with substantially all of the bacteria and viruses, and then treating the water to remove the Iron or Aluminium ion. Iron or Aluminium ions are preferably added at 1 to 5 ppm levels. It is said that a significant aspect of the invention is in the small amounts of ions when used in conjunction with filter aids such as diatomaceous earth or calcined magnesite and inorganic alkaline materials that are used to remove bacteria and viruses,.

US6110374 (AQUA AEROBIC SYSTEMS INC, 2000) discloses a treatment process for reducing pathogenic micro-organisms of size about 10 microns from wastewater, in which about 99.9% of the pathogenic micro-organisms are separated. The process includes adding an agglomerate-promoting agent, such as a coagulant chemical at about 2-10 ppm along with conventional filter-aids; to the volume of waste-water such that the solid aggregates form in the volume of waste-water and include the pathogenic micro-organisms. The volume of waste- water is then passed through a filter cloth membrane to separate greater than about 50.0% of the pathogenic micro-organisms. It has been said that the treatment process can separate greater than about 50.0% and up to about 99.9% of protozoan pathogens such as Cryptosporidium and Giardia from the volume of wastewater.

JP58122010 (ASAHI GLASS CO LTD, 1983) describes addition of 2-20 ppm of filter aids such as Iron hydroxide, Iron sulphate and Iron chloride, and about 0.1-10 ppm of oxidizing agents such as sodium hypochlorite, sodium hypobromite, chlorine, bromine, bromine chloride and hydrogen peroxide to water containing ≤ 10ppm floating suspended matters; and the treated water is passed through a sand filter layer, which has the 300- 1000 mm layer thickness and consists of sand having a 0.2-2 mm average particle size, at 2-15 m$^3$/m$^2$ filtering speed. By this method, the turbidity of the treated water is reduced to ≤0.1 ppm.

Thus it may be seen that the prior art is replete with methods for purifying water using low amounts of ions such as Fe$^{+2}$, Fe$^{+3}$ and Al$^{+3}$. However, it can be readily seen that addition of filter aids, and pH modifying agents or flocculating agents is also essential. The present inventors have found that the addition of coagulating agents at high concentrations, as described in prior art do help in removal of particulate matter, but they also alter the taste and pH of water drastically; hence presence of either a high molecular weight anionic polymer (to reduce dose of cationic load) and/or a buffering agent (to control solution pH) is required. On the other hand, it was observed that the addition of filter aids such as Calcium oxide or Magnesium oxide cause a significant lowering in the flow-rate of filtration.

Thus, there is a need for better compositions for purifying water that would provide filtered water having significantly low turbidity/suspended solids and cysts without significant change in water pH; while at the same time provide a significantly higher flow-rate of filtered water for a relatively longer period.

## OBJECT OF THE INVENTION

It is an object of the present invention to overcome or ameliorate at least one of the disadvantages of the prior art.
It is an object of the present invention to provide a composition and a method for purifying water that provides reduction in turbidity of water to less than 0.2 NTU (Nephelometric Turbidity Units), >90% removal of total suspended solids and at least 3-log removal of cysts, while at the same time providing for flow-rate of at least 100 ml/minute of purified water.
It is an object of the present invention to provide a composition and a method for purifying water, without using conventional filter aids, flocculating agents or pH modifying agents.
Other objects of the present invention will become apparent to those skilled in the art by reference to the specification.

## SUMMARY OF THE INVENTION

According to the first aspect, the present invention provides a composition to aid filtration of water comprising:

(i) 0.5 wt% to 5 wt% of an Iron or Aluminium salt;

(ii) 15 wt% to 70 wt% of chloride or sulphate of Magnesium or Calcium; and,

(iii) 10 wt% to 80 wt% clay.

Preferably the Iron salt is selected from Ferrous sulphate, Ferric sulphate, Ferrous chloride or Ferric chloride.
Preferably the Aluminium salt is selected from Aluminium sulphate, Aluminium chloride, Polyaluminium chloride, Polyaluminium sulphate or Aluminium chlorohydrate.
Preferably the composition includes Calcium chloride from amongst the chloride or sulphate of Magnesium or Calcium.
Preferably the clay is Bentonite.
According to the second aspect, the present invention provides a method for purification of water comprising the steps of:

(i) mixing a composition comprising:

(a) 0.5 wt% to 5 wt% of an Iron or Aluminium salt;

(b) 15 wt% to 70 wt% of chloride or sulphate of Magnesium or Calcium; and,

(c) 10 wt% to 80 wt% clay, with said water,

and,

(ii) passing the water through a filter medium.

As used herein, the term "comprising" means that a specified material or element is present, optionally together with a further material or element, and includes including, made up of, composed of, consisting and/or consisting essentially of.
For a more complete understanding of the above and other features and advantages of the invention, reference should be made to the following detailed description of preferred embodiment/s.
The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

Except in the operating and comparative examples, or where otherwise explicitly indicated, all numbers in this description indicating amounts of material ought to be understood as modified by the word "about".

It should be noted that in specifying any range of concentration or amount, any particular upper concentration can be associated with any particular lower concentration or amount.

## DETAILED DESCRIPTION OF THE INVENTION

According to the first aspect, the present invention provides a composition to aid filtration of water comprising:

(i) 0.5 wt% to 5 wt% of an Iron or Aluminium salt;

(ii) 15 wt% to 70 wt% of chloride or sulphate of Magnesium or Calcium; and,

(iii) 10 wt% to 80 wt% clay.

It is preferred that the Iron salt is selected from Ferrous sulphate, Ferric sulphate, Ferrous chloride or Ferric chloride. It is preferred that the Aluminium salt is selected from Aluminium sulphate, Aluminium chloride, Polyaluminium chloride, Polyaluminium sulphate or Aluminium chlorohydrate.

It is essential that the composition includes 15 wt% to 70 wt%, preferably 60 wt% to 70 wt%, and more preferably 60 wt% to 66 wt% chloride or sulphate of Magnesium or Calcium. It is preferred that the composition includes Calcium chloride. Without wishing to be bound by theory it is believed that the addition of chloride or sulphate of Magnesium or Calcium, changes the Total Dissolved Solids (TDS), and it also changes the zeta potential of the contaminants (makes it relatively positive) and thereby helps increase the aggregation of contaminants in the bulk, thus further helping in filtration. Without wishing to be bound by theory it is believed that, other salts are not suitable for inclusion in the composition as they are either corrosive or give bad odour due to generation of gases such as Hydrogen sulphide or have very low water solubility, or alter the pH drastically. It has been observed by the present inventors that chloride or sulphate of Magnesium or Calcium is soluble in water, and they increase the TDS of water, but do not affect the pH drastically.

The clay acts as a filler material which provides high absorption of water, and rapid and high absorption of inorganic and organic compounds. It is preferred that the clay is selected from Montmorillonite, (dioctheydral smectite clay), Laponite, Hectorite, Nontronite, Saponite, Volkonsite, Sauconite, Beidellite,

Allevarlite, Illite, Halloysite, Attapulgite, Mordenite, Kaoline, and Bentonite. A highly preferred clay as per this invention is Bentonite. The clay is present from in the range of 10 wt% to 80 wt%, more preferably 20 wt% to 50 wt% and most preferably 25 wt% to 35 wt%. Clays, such as Bentonite are inert, serve as bulking agent, and also swell when added to water; thereby making it a very useful component.

The composition may be in the form of powder, granules or tablet. While it is preferred that the composition includes an Iron salt or an Aluminium salt; it is also possible that the composition includes a mixture of the two.

According to the second aspect, the present invention provides a method for purification of water comprising the steps of:

(i) mixing a composition comprising:

(a) 0.5 wt% to 5 wt% of an Iron or Aluminium salt;

(b) 15 wt% to 70 wt% of chloride or sulphate of Magnesium or Calcium; and,

(c) 10 wt% to 80 wt% clay, with said water,

and,

(ii) passing said water through a filter medium.

It is preferred that 0.1 to 0.5 g, more preferably 0.2 to 0.4 g, and most preferably 0.3 to 0.4 g of said composition is mixed with every litre of water.

In the composition used in the method according to the invention, the Iron salt is selected from Ferrous sulphate, Ferric sulphate, Ferrous chloride or Ferric chloride. In the method according to the invention, it is preferred that through Ferrous sulphate or Ferrous chloride, 0.1 ppm to 5 ppm of $Fe^{2+}$ is added to the water. The present inventors have found that the cation concentration limit for formation of visible flocs is about 5 ppm for $Fe^{2+}$. It is preferred that from 0.1 ppm to 5 ppm; more preferably from 0.5 ppm to 4 ppm of $Fe^{2+}$ is added to the water. It is further preferred that 1 ppm to 3 ppm of $Fe^{2+}$ is added to the water. In the case of Ferric sulphate or Ferric chloride, it is preferred that from 0.1 ppm to 3.5 ppm of $Fe^{3+}$ is added to the water through the composition. The present inventors have found that the lower limit of cation concentration for formation of visible flocs is about 3.5 ppm for $Fe^{3+}$.

In the case where the composition includes Aluminium sulphate, Aluminium chloride, Aluminium chlorohydrate, Polyaluminium chloride or Polyaluminium sulphate, it is preferred that through the Aluminium salt, $Al^{n+}$ ions, where "n" is a number from 3 to 13, are added to said water at a concentration of 0.1 ppm to 2 ppm. It is further preferred that 0.5 ppm to 2 ppm, and most preferably from 0.8 ppm to 1.5 ppm of $Al^{n+}$ ions are added to the water through the composition. The present inventors have found that the cation concentration limit for formation of visible flocs is about 2 ppm for $Al^{3+}$. In the case of Polyaluminium chloride or Polyaluminium sulphate, the preferred range of addition of $Al^{n+}$ is from 0.1 ppm to 1 ppm, more preferably from 0.1 ppm to 0.8 ppm and most preferably from 0.1 ppm to 0.5 ppm.

It is preferred that in the process according to the invention The concentration of chloride or sulphate of Calcium or Magnesium in the water in preferably in the range of 50 ppm to 200 ppm, and more preferably in the range of 150 ppm to 200 ppm. It was observed by the present inventors that above 200 ppm, the salt level affects the taste of water. In the process according to the invention, although not essential, some sort of agitation may also be provided, after adding the composition.

In the method according to the invention, it is preferred that the amount of metal cation added through the composition according to the invention is less than that required to cause flocculation of contaminants in the water. This is so because, flocculated particles generally have dirty colour and these particles quickly settle to the bottom of the container containing the water. Another drawback of floc formation is that these flocs generally clog/choke the filter-medium thereby reducing/affecting its lifetime and/or performance. Flocs are particles finer than 0.1 $\mu$m which remain continuously in motion due to electrostatic charge (often negative) which causes them to repel each other. Once their electrostatic charge is neutralized, by the use of coagulant chemicals, the finer particles start to collide and agglomerate (combine together) under the influence of Van der Waals's forces. These larger and heavier particles are responsible for affecting the filter-medium's life/performance. Coagulating agents reduce the pH of water, and also impart colour thereby making it unsuitable for drinking purpose; without the addition of anionic flocculants or pH buffering agents. Conventional filter aids (also known as filtration aids) are agents which are added directly to water, to aid filtration of water or aqueous waste. The list includes Diatomaceous earth, Perlite, cellulose, Kieselguhr, Rice Hull Ash (RHA), Calcium oxide and Magnesium oxide. Flocculating agents which include polyacrylamides, polysaccharides (dextrans celluloses), proteins (casein), modified celluloses (hydroxyethyl or hydroxypropyl or carboxymethyl. The present inventors have found that when the water contains conventional filter aids, the flow-rate of filtered water is adversely affected and unacceptably lowered.

In the second stage of the method according to the invention, the water is made to pass through a filter-medium. This helps in actual removal of the contaminants. The filter-medium is selected from a woven fabric, non-woven fabric, or particulate matter. The preferred woven or non-woven fabric is selected from polyester, polypropylene, nylon, viscose rayon or cotton. The preferred particulate matter is selected from activated carbon, diatomaceous earth, ceramic or sand. The bed can be in the form of loose granules or bound block. It is preferred that the filter-medium is a non-woven fabric or a carbon block.

It has been found by the present inventors that the present method provides for removal of greater than 90% of the total suspended solids, greater than 90% removal of turbidity, as well as atleast 3-log removal of cysts (which is equivalent to atleast 99.9% removal). Log removal is defined as the $\log_{10}$ of the number of input particles minus the $\log_{10}$ of the number of output particles.

Further details of the invention, its objects and advantages are explained hereunder in greater details with reference to the following non-limiting examples. It would be apparent to a person skilled in the art that many such examples are possible and the examples given under are for illustrative purpose only. These should not be construed so as to limit the scope of this invention in any manner.

## EXAMPLES

### EXAMPLE-1

#### Effect of a composition and method according to the invention on cyst removal

Two compositions as per Table-1 were made and tested.

**Table-1**

| Ingredient | Composition-1 | | Composition-2 | |
|---|---|---|---|---|
| | Weight in grams | Weight % | Weight in grams | Weight % |
| Aluminium sulphate | 0.12 | 3.84 | -- | -- |
| Ferric sulphate | -- | | 0.037 | 1.21 |
| Calcium chloride | 2.0 | 64.10 | 2.0 | 65.85 |
| Bentonite | 1.0 | 32.05 | 1.0 | 32.92 |

A model feed (test) water as per NSF-53 protocol (NSF stands for National Science Foundation, USA) was prepared, the composition of which is given in Table-2 below. Turbidity of this Test water was 0.5-0.8 NTU, pH was 7-7.5 and TDS (Total dissolved salts) was ~300 ppm. This test water simulated highly contaminated water, totally unfit for human consumption.

**Table-2**

| Ingredients | Concentration |
|---|---|
| Calcium Chloride | 200 ppm |
| Sodium Bicarbonate | 100 ppm |
| Oocysts (Procured from BTF Precise Microbiology, Australia | 50000/Litre (as added) |

**Filter medium**

A non-woven polyester fabric having thickness of 1.5 mm (Ex. Travencore Fibres Private Ltd, Mumbai, India) was used as the filter-medium. The total path-length of the filter medium was 4.5 mm, and to achieve this path-length, 3 pieces of the above fabric of having diameter of 15 cm were stacked one over the other inside a fabric-holding-assembly. The specifications of the filter medium are as given in Table-3 below.

**Table-3**

| Test | Value for non- woven Polyester |
|---|---|
| Bursting strength (kg/cm$^2$) | 35 |
| Weight/m$^2$ (g) | 500 |
| Density (g/cc) | 1.3- 1.4 |
| Thickness (mm) | 1.3 |
| Withstand Temperature(°C) | 150 |
| Air permeability (cm$^3$ of air/sec passing through 1 cm$^2$ area) at 1.22" of water column | 44 |

The fabric-holding-assembly was fitted inside a chamber of 10 litre capacity and had a throttle of 2.5 mm at the bottom.

In a Control Experiment-1, the test water as mentioned in Table-1 was passed through the stacked filter medium kept in the assembly and the output water was collected for analysis of cyst content.

In Experiment-2, the composition-1 of Table-1 containing 0.12 g Aluminium sulphate (corresponding to 1 ppm of $Al^{3+}$), 2 g of Calcium chloride and 1 g Bentonite clay was added to 10 litres of the above Test Water as per Table-2 (3.12 grams of the composition being added to 10 litres of water, amounts to 0.312 g of the composition being added per litre of water) and was stirred for a minute. This water was then passed through the filter medium kept inside the assembly and the output water was collected for analysis of cyst content.

In Experiment-3, the Composition-2 of Table-1 containing 0.037 g Ferric sulphate (corresponding to 1 ppm of $Fe^{3+}$), 2 g Calcium chloride and 1 g of Bentonite clay was added to 10 litres of the above Test Water as per in Table-2 (3.037 grams of the composition being added to 10 litres of water, amounts to 0.303 g of the composition being added per litre of water) and was stirred for a minute. This water was then passed through the stacked fabrics kept inside the assembly and the output water was collected for analysis of cyst content.

This Test Water was filtered through the filter medium at peak flow rate of 300 ml/minute. The throttled flow-rate (through a throttle of 2.5 mm diameter to control the flow-rate) was measured by collecting the output water for one minute under a water head of 15 cm. The initial and the final cyst counts were determined by filtering the samples through a 0.45 $\mu$ MILLIPORE™ filter paper. The cysts were counted using LYMPUS™ BX40 Fluorescence Microscope by methods well known in the art. The Table-4 below summarises the data on "log-removal" of cysts for all three experiment.

**Table-4**

| Experiment | Input Cyst concentration in numbers/litre (as measured) | Output Cyst concentration in numbers/litre (as measured) | Log removal |
|---|---|---|---|
| 1 (control) | 4800 | 750 | 0.8 |
| 2 | 4800 | 0 | 3.68 |
| 3 | 4800 | 0 | 3.68 |

The data in Table-4 shows the effect of addition of the compositions according to the invention, vis-à-vis control experiment on cyst removal. The example clearly shows that the composition and method according to the invention provided atleast 3-log removal of cysts.

**EXAMPLE-2**

**Effect of Composition according to the invention on turbidity and flow-rate**

In this experiment, the effect of Composition-2 of Table-1 on turbidity and flow-rate was studied. The composition of Test water used for this experiment is as per Table-5 below.

**Table-5**

| Ingredient | Concentration |
|---|---|
| Calcium Chloride | 200 ppm |
| Sodium Bicarbonate | 100 ppm |
| ARIZONA™ Fine test dust<br>Particle size - 0.5 -200 $\mu$<br>Supplier : Powder Technology INC, USA | 1.5 g/l |

Turbidity of this Test water was 12-13 NTU, pH was 7-7.5 and TDS (Total dissolved salts) was ~300 ppm. This test water simulated highly contaminated water, totally unfit for human consumption.

In this case, a pleated filter made of non-woven polyester surface (Ex. Travencore Fibres Private Limited, Mumbai, India) was used. The external surface area of this filter medium was 780 cm$^2$. The height was 13 cm and the diameter of the pleated surface was 4 cm. The cumulative filter depth was 7.5 mm, which was achieved by spiral winding of non-woven fabric on a cylindrical mandrel and winding the pleated layer over the spiral non-pleated layers. This combination of pleated and non-pleated layers was then sealed on an end cap on one side and base plate (with a throttle of 2.5 mm) on the other side. The pleated filter was then fitted in a chamber of 10 litre capacity.

The Composition-2 of Table-1 containing 0.037 g Ferric sulphate (corresponding to 1 ppm of Fe$^{3+}$), 2 g Calcium chloride and 1 g of Bentonite clay was added to 10 litre of Test Water as per in Table-5 (3.037 grams of the composition being added to 10 litres of water, amounts to 0.303 g of the composition being added per litre of water) and was stirred for a minute. This water was then added to the chamber; and was allowed to pass through the filter medium. The flow of water was from pleated layer to the non-pleated layers. The present inventors have found that if the flow direction is reversed, then the filter-medium would clog faster. Samples of input and output water were drawn at varying intervals to determine the turbidity and the level of Total Suspended Solids. In addition, the flow-rate of water was also monitored. The turbidity of the sample was analyzed by MERCK TURBIQUANT™ 1500-T Turbidity meter. The instrument displayed the turbidity value in NTU on its digital screen. Total Suspended Solids (TSS) was measured using TARSONS™ filtration apparatus. A MILLIPORE™ filter paper of 0.22 $\mu$ pore size and 45 mm diameter was taken and dried at 110°C for 45 minutes in an oven. The filter paper was then weighed under anhydrous conditions and the weight was recorded as ($W_1$

mg) and placed on the filter support lid of the TARSONS™ apparatus. The apparatus was connected to vacuum on the permeate side. The water sample was stirred uniformly and poured in the apparatus. After the filtration, vacuum valve was closed and the filtrate volume was measured. Filter paper was removed, dried in oven at 110 °C for 45 minutes. and weighed under anhydrous conditions, immediately. This weight was recorded as $W_2$ (mg). The TSS in mg/l was thus calculated as:

$$\text{TSS} = \frac{(W_2 - W_1)}{\text{Volume of sample in litre}}$$

The results are given in Table-6 below.

**Table-6**

| Total Volume of water passed (litre) | Flow rate in ml/minute through the filter medium at water head of 15 cm | Turbidity (NTU) | | Total suspended solids removal (%) |
|---|---|---|---|---|
| | | Input | Output | |
| 10 | 300 | 13 | 13 | 95 |
| 50 | 350 | 12.7 | 0.07 | 96 |
| 100 | 280 | 12.5 | 0.05 | 94 |
| 150 | 200 | 12.5 | 0.04 | 94 |
| 200 | 180 | 12.5 | 0.07 | 93 |
| 250 | 130 | 13.1 | 0.04 | 95 |
| 300 | 130 | 13.1 | 0.18 | 96 |
| 350 | 140 | 13.8 | 0.12 | 95 |
| 400 | 130 | 12.6 | 0.11 | 95 |
| 450 | 150 | 13.1 | 0.31 | 94 |
| 500 | 180 | 12.4 | 0.08 | 94 |
| 550 | 150 | 12.5 | 0.10 | 95 |
| 600 | 140 | 12.6 | 0.08 | 95 |
| 650 | 130 | 13.8 | 0.12 | 95 |
| 700 | 110 | 13.2 | 0.12 | 94 |

The above data indicates that even after passing about 700 litres of test water, which had input turbidity level of ~13 NTU, the output turbidity level was ~ 0.1 NTU, and the flow-rate of filtered water was over 100 ml/minute, which is a reasonably high flow-rate. In addition, the TSS removal was greater than 90%.

**EXAMPLE-3**

**Effect of addition of conventional filter aids to Test Water**

This is a comparative example in which conventional filter aids (Calcium oxide and Magnesium oxide) were also added to the test-water, and the effect of their addition on turbidity and flow-rate was studied. The composition of Test water used for this experiment was as per Table-5.
0.5 g of Calcium oxide and 0.5 g of Magnesium oxide were mixed with the Composition-2 of Table-1 and was added to 10 litres of Test Water as in Table-5 and was stirred for a minute. The filter medium used for this experiment and the procedure was same as used in Example-2. The results are presented in Table-7 below.

Table-7

| Total suspended solids removal (%) | Total Volume of water passed (litre) | Flow rate in ml/minute through the filter medium at water head of 15 cm | Turbidity (NTU) | |
|---|---|---|---|---|
| | | Input | Output | |
| 93 | 10 | 330 | 16.2 | 0.15 |
| 94 | 50 | 270 | 15.2 | 0.08 |
| 95 | 100 | 265 | 17.8 | 0.05 |
| 93 | 150 | 200 | 18.4 | 0.06 |
| 95 | 200 | 180 | 17.4 | 0.05 |
| 96 | 250 | 140 | 15.2 | 0.08 |
| 95 | 300 | 140 | 16.6 | 0.07 |
| 94 | 350 | 130 | 16.8 | 0.06 |
| 95 | 400 | 140 | 16.8 | 0.06 |
| 93 | 450 | 120 | 16.8 | 0.08 |
| 93 | 490 | 80 | 16.2 | 0.08 |

Thus, it may be seen that just after passing about 500 litres of test water, which had input turbidity level of about 17 NTU, the flow-rate of filtered water was lowered to unacceptable level of 80 ml/minute, although the output turbidity was about 0.07 NTU, and the Total suspended solids removal was greater than 90%. Hence it could be concluded that the addition of filter aids adversely affected the filtration rate and lead to premature clogging of filter.

It will be appreciated that the illustrated examples provide a composition and method for purifying water that provides reduction in turbidity of water to less than 0.2 NTU (Nephelometric Turbidity Units), >90% removal of total suspended solids, at least 3-log removal of cysts and at a flow-rate of at least 100 ml/minute of purified water.

It will also be appreciated that the illustrated examples provide for a method for purifying water, without using conventional filter aids, flocculating agents or pH modifying agents.

It should be understood that the specific forms of the invention herein illustrated and described are intended to be representative only as certain changes may be made therein without departing from the clear teachings of the disclosure.

Although the invention has been described with reference to specific embodiments, it will be appreciated by those skilled in the art that the invention may be embodied in many other forms.

## Claims

1. A composition to aid filtration of water comprising:

    (i) 0.5 wt% to 5 wt% of an Iron or Aluminium salt;
    (ii) 15 wt% to 70 wt% of chloride or sulphate of Magnesium or Calcium; and,
    (iii) 10 wt% to 80 wt% clay.

2. A composition as claimed in claim 1 wherein said Iron salt is selected from Ferrous sulphate, Ferric sulphate, Ferrous chloride or Ferric chloride.

3. A composition as claimed in claim 1 wherein said Aluminium salt is selected from Aluminium sulphate, Aluminium chloride, Polyaluminium chloride, Polyaluminium sulphate or Aluminium chlorohydrate.

4. A composition as claimed in any one of the preceding claims wherein said clay is selected from Montmorillonite, Laponite, Hectorite, Nontronite, Saponite, Volkonsite, Sauconite, Beidellite, Allevarlite, Illite, Halloysite, Attapulgite, Mordenite, Kaoline or Bentonite.

**5.** A composition as claimed in claim 4 wherein said clay is Bentonite.

**6.** A method for purification of water comprising the steps of:

(i) mixing a composition comprising:

(a) 0.5 wt% to 5 wt% of an Iron or Aluminium salt;
(b) 15 wt% to 70 wt% of chloride or sulphate of Magnesium or Calcium; and,
(c) 10 wt% to 80 wt% clay; with said water,

and,
(ii) passing said water through a filter medium.

**7.** A method as claimed in claim 6 wherein 0.1 to 0.5 g of said composition is mixed with every litre of water.

**8.** A method as claimed in claim 6 wherein said Iron salt is Ferrous sulphate or Ferrous chloride.

**9.** A method as claimed in claim 8 wherein through said Ferrous sulphate or Ferrous chloride, $Fe^{+2}$ ions are added to said water at a concentration of 0.1 ppm to 5 ppm.

**10.** A method as claimed in claim 6 wherein said Iron salt is Ferric sulphate or Ferric chloride.

**11.** A method as claimed in claim 10 wherein through said Ferric sulphate or Ferric chloride, $Fe^{+3}$ ions are added to said water at a concentration of 0.1 ppm to 3.5 ppm.

**12.** A method as claimed in claim 6 wherein through said Aluminium salt, $Al^{n+}$ ions, where "n" is a number from 3 to 13, are added to said water at a concentration of 0.1 ppm to 2 ppm.

**13.** A method as claimed in any one of the preceding claims 6 to 12 wherein said filter medium is a woven fabric, non-woven fabric, or particulate matter.

**14.** A method as claimed in claim 13 wherein said woven fabric or non-woven fabric is selected from polyester, polypropylene, nylon, viscose rayon or cotton.

**15.** A method as claimed in claim 13 wherein said particulate matter is selected from activated carbon, diatomaceous earth, ceramic or sand.

EP 2 168 920 A1

**EUROPEAN SEARCH REPORT**

Europäisches Patentamt
European Patent Office
Office européen des brevets

Application Number

EP 08 16 8791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 033772 A (MIURA KOGYO KK) 4 February 2003 (2003-02-04) * paragraph [0012] * * paragraph [0013] * * examples 1-9 * | 1-15 | INV. C02F1/28 C02F1/52 |
| A | EP 0 159 178 A (HYDRO INT LTD [GB]) 23 October 1985 (1985-10-23) * the whole document * | 1-15 | |
| A | CN 101 148 273 A (JINXIANG ZHANG [CN]) 26 March 2008 (2008-03-26) * the whole document * | 1-15 | |
| A | CN 1 765 804 A (SHANGHAI SHENFENG GEOL TECHNOL [CN]) 3 May 2006 (2006-05-03) * the whole document * | 1-15 | |
| A | EP 0 000 674 A (TECHNIME S A SA [FR]) 7 February 1979 (1979-02-07) * the whole document * | 1-15 | TECHNICAL FIELDS SEARCHED (IPC) |
| A | WO 03/010233 A (PPG IND OHIO INC [US]) 6 February 2003 (2003-02-06) * the whole document * | 1-15 | C02F |

The present search report has been drawn up for all claims

| Place of search | Date of completion of the search | Examiner |
|---|---|---|
| The Hague | 26 March 2009 | Janssens, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

11

**EP 2 168 920 A1**

## ANNEX TO THE EUROPEAN SEARCH REPORT
## ON EUROPEAN PATENT APPLICATION NO.

EP 08 16 8791

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2009

| Patent document cited in search report | | Publication date | Patent family member(s) | | Publication date |
|---|---|---|---|---|---|
| JP 2003033772 | A | 04-02-2003 | NONE | | |
| EP 0159178 | A | 23-10-1985 | CA | 1249081 A1 | 17-01-1989 |
| | | | DE | 3579350 D1 | 04-10-1990 |
| | | | GB | 2157278 A | 23-10-1985 |
| | | | US | 4783265 A | 08-11-1988 |
| CN 101148273 | A | 26-03-2008 | NONE | | |
| CN 1765804 | A | 03-05-2006 | NONE | | |
| EP 0000674 | A | 07-02-1979 | BR | 7804616 A | 10-04-1979 |
| | | | CA | 1114532 A1 | 15-12-1981 |
| | | | DE | 2861687 D1 | 29-04-1982 |
| | | | ES | 471917 A1 | 01-02-1979 |
| | | | FR | 2397863 A1 | 16-02-1979 |
| | | | IT | 1108770 B | 09-12-1985 |
| | | | JP | 54060272 A | 15-05-1979 |
| | | | US | 4217210 A | 12-08-1980 |
| WO 03010233 | A | 06-02-2003 | DE | 60220059 T2 | 24-01-2008 |
| | | | EP | 1409582 A1 | 21-04-2004 |
| | | | ES | 2286265 T3 | 01-12-2007 |
| | | | US | 2004000329 A1 | 01-01-2004 |
| | | | US | 2004084067 A1 | 06-05-2004 |
| | | | US | 2003026906 A1 | 06-02-2003 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3399136 A
- US 6110374 A

- JP 58122010 B